# EUROPÄISCHE PATENTSCHRIFT

(11) **EP 1 098 469 B1**
(45) Veröffentlichungstag und Bekanntmachung des Hinweises auf die Patenterteilung: **06.06.2007**
(21) Anmeldenummer: 99121760.5
(22) Anmeldetag: 03.11.1999
(51) Int. Cl.: H04L 9/06

(54) **Kodiervorrichtung**
Coding device
Dispositiv de codage

(43) Veröffentlichungstag der Anmeldung: 09.05.2001
(73) Patentinhaber: Infineon Technologies AG, 81541 München (DE)
(72) Erfinder: Boeckeler, Gregor, 80799 München (DE)
(74) Vertreter: Epping - Hermann - Fischer

(56) Entgegenhaltungen:
- EP-A- 0 368 727
- EP-A- 0 486 368
- WO-A-99/35782
- WO-A-99/49416
- CH-A- 667 173

## Beschreibung

Die vorliegende Erfindung bezieht sich auf eine Kodiervorrichtung und insbesondere auf eine Kodiervorrichtung zur Realisierung einer kryptographischen Verschlüsselung und/oder Zugangsberechtigung.

Die meisten kryptographischen Systeme benötigen eine sichere Behandlung der bei der kryptographischen Verarbeitung verwendeten Schlüssel. In Sicherheitssystemen mit sogenannten öffentlichen Schlüsseln (public-key) müssen die dazugehörigen privaten Schlüssel (private-keys) derart geschützt sein, daß mögliche Angreifer den oder die Schlüssel auf keinen Fall lesen bzw. entziffern können, da ansonsten beispielsweise digitale Signaturen gefälscht, Daten modifiziert und geheime Informationen dechiffriert werden können.

Im wesentlichen unterscheidet man hierbei zwischen symmetrischen und asymmetrischen Algorithmen bzw. kryptographischen Protokollen, mit deren Hilfe ein unerwünschter Datenangriff auf vertrauliche oder geheime Daten verhindert werden soll.

Beispielsweise müssen kryptographische Kodiervorrichtungen zur Realisierung einer Verschlüsselung und/oder einer Zugangsberechtigung ihre geheimen Schlüssel selbst dann sicher schützen, wenn sie sich in einer angreifbaren Umgebung befinden. Als derartige kryptographische Kodiervorrichtungen sind beispielsweise sogenannte Chipkarten, Smartcards, oder sicherheitsrelevante Module bekannt, die beispielsweise bei Geldautomaten, KFZ-Wegfahrsperren, usw. eine gesicherte Zugangsberechtigung oder eine gesicherte Verschlüsselung von Daten ermöglichen.

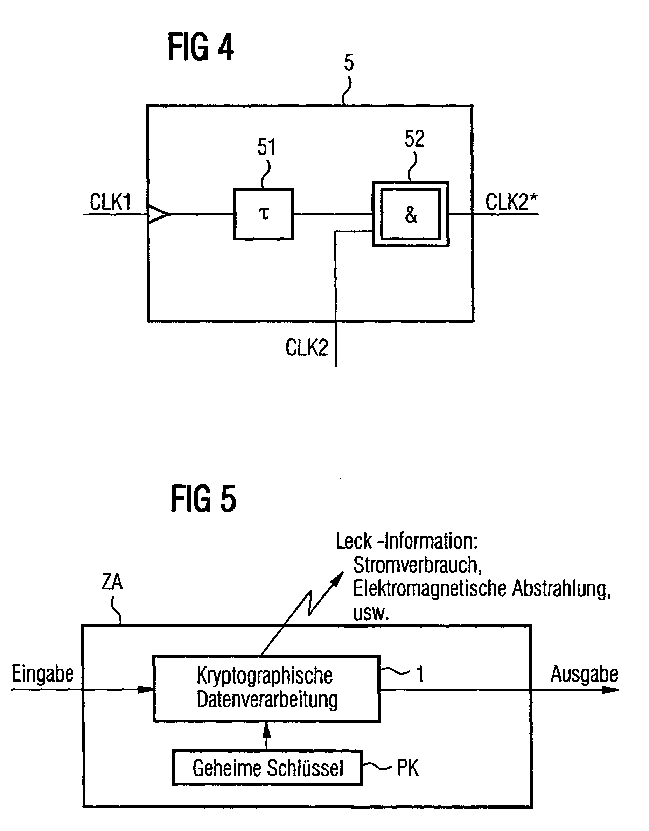

Die Figur 5 zeigt eine schematische Darstellung einer derartigen Kodiervorrichtung zur Realisierung einer kryptographischen Verschlüsselung und/oder Zugangsberechtigung, die im wesentlichen aus einer kryptographischen Datenverarbeitungseinheit 1 besteht und eine Eingabe bzw. eingegebene Daten unter Verwendung eines geheimen Schlüssels PK (private-key) kryptographisch verarbeitet. Die so verarbeiteten Daten werden anschließend an einer Ausgabe ausgegeben, wodurch die kryptographische Verschlüsselung oder eine gesicherte Zugangsberechtigung realisiert wird. Der in Figur 5 dargestellte Zustandsautomat ZA wird beispielsweise als Chipkarte, Smartcard, gesicherte Mikroprozessoreinheit oder dergleichen realisiert. Demzufolge verwendet die kryptographische Kodiervorrichtung ZA den geheimen Schlüssel PK zum Verarbeiten von eingegebenen Informationen und zum Ausgeben bzw. Erzeugen von Informationen, wobei die kryptographischen Algorithmen bzw. Protokolle üblicherweise derart entworfen sind, daß ein Angriff auf die zu verschlüsselnden oder geheimen Daten an der Eingabe- oder Ausgabe-Schnittstelle abgewehrt werden kann.

Es hat sich jedoch herausgestellt, daß wesentlich wirkungsvollere Angriffe auf kryptographische Kodiervorrichtungen bzw. Kodierverfahren und deren geheime Schlüssel auch über sogenannte Leck-Informationen erfolgen können. Gemäß Figur 5 sind dies beispielsweise ein Stromverbrauch, eine elektromagnetische Abstrahlung oder dergleichen, die bei der kryptographischen Datenverarbeitung Rückschlüsse über die verwendeten geheimen Schlüssel bzw. das verwendete kryptographische Verfahren ermöglichen.

Die vorliegende Erfindung beschäftigt sich hierbei insbesondere mit einem Angriff über die sogenannte Stromprofilanalyse. Bei der Analyse eines Stromprofils des Zustandsautomaten ZA wird hierbei der Umstand ausgenutzt, daß integrierte Schaltungen aus einer Vielzahl von einzelnen Transistoren bestehen, die im wesentlichen als spannungsgesteuerte Schalter arbeiten. Hierbei fließt Strom über ein Transistorsubstrat, sobald Ladungen an einem Gate angelegt oder entfernt werden. Dieser Strom liefert wiederum Ladungen an die Gates von weiteren Transistoren, wodurch wiederum weitere Verdrahtungsabschnitte oder Lasten geschaltet werden. Ein derartiges Schaltverhalten, das insbesondere beim Abarbeiten von kryptographischen Algorithmen durchgeführt wird, ist daher über die Stromversorgung des Zustandsautomaten ZA meßbar und ermöglicht Angreifern beispielsweise das Lesen des geheimen Schlüssels PK.

Die bekanntesten Stromprofilanalysen sind hierbei die einfache Stromprofilanalyse (simple power analysis, SPA), die differentielle Stromprofilanalyse (differential power analysis, DPA) und die differentielle Stromprofilanalyse höherer Ordnung (high-order differential power analysis, HO-DPA). Während die einfache Stromprofilanalyse SPA im wesentlichen eine visuelle Überwachung der Schwankungen im Stromverbrauch berücksichtigt, verwenden Angriffe mittels der differentiellen Stromprofilanalyse DPA statistische Analyseverfahren sowie Fehlerkorrekturverfahren zum Extrahieren von Informationen, die mit geheimen Schlüsseln korreliert sind. Differentielle Stromprofilanalysen höherer Ordnung (HO-DPA) verbessern die Möglichkeiten eines Angriffs zum Extrahieren von geheimen Schlüsseln mittels eines meßbaren Stromverbrauchs, wobei jedoch die differentielle Stromprofilanalyse in den meisten Fällen bereits ausreicht.

Zur Verhinderung derartiger Angriffe auf kryptographische Kodiervorrichtungen ist aus der Druckschrift WO 99/35782 ein kryptographisches Verfahren und eine kryptographische Vorrichtung bekannt, mittels der die genannten Stromprofilanalysen unwirksam werden. Im wesentlichen ist hierbei ein Verfahren und eine Vorrichtung beschrieben, bei dem sich durch ständiges Ändern der für die kryptographische Datenverarbeitung wesentlichen Schritte die für einen Angreifer lesbare Leck-Information sozusagen _{"}selbstheilend" auslöscht. Dadurch werden insbesondere statistische Auswertungen verhindert und ein Angriff über den Stromverbrauch eines Zustandsautomaten bzw. über elektromagnetische Abstrahlung zuverlässig verhindert.

Nachteilig bei einer derartigen Realisierung eines Angriffsschutzes ist jedoch die Tatsache, daß schwerwiegende Eingriffe in die kryptographische Software des Systems bzw. des Zustandsautomaten vorgenommen werden müssen. Genauer gesagt kann ein derartiger Schutz nur in Kenntnis der jeweiligen kryptographischen Algorithmen bzw. Protokolle durchgeführt werden, die entsprechend abgeändert werden oder sich gegebenenfalls selbständig abändern. Ein derartiger Eingriff in die unmittelbare Software der kryptographischen Datenverarbeitung erfordert jedoch einen außerordentlich hohen Aufwand, ist darüber hinaus nur von Experten zu realisieren und von jeweiligen Benutzern (Kunden) oftmals nicht erwünscht.

Aus der Veröffentlichung WO 99/49416 A ist weiterhin eine Kodiervorrichtung gemäß der Präambel des unabhängigen Anspruchs bekannt. Insbesondere wird in diesem Dokument bereits der Einsatz eines zufallsgesteuerten Stromprofilgenerators zur Erschwerung von Seitenkanalangriffen erwähnt.

Der Erfindung liegt daher die Aufgabe zugrunde, eine Kodiervorrichtung zur Realisierung einer kryptographischen Verschlüsselung und/oder Zugangsberechtigung zu schaffen, die ohne Modifikation der kryptographischen Zustandsabläufe insbesondere eine Stromprofilanalyse zuverlässiger verhindert.

Diese Aufgabe wird erfindungsgemäß durch die Merkmale des Patentanspruchs 1 gelöst.

Insbesondere durch die Verwendung einer Stromprofilgeneratoreinheit zum Erzeugen eines Störstromprofils wird einem Stromprofil des Zustandsautomaten ein Störstromprofil überlagert, wodurch eine Stromprofilanalyse zum Extrahieren eines geheimen Schlüssels oder von geheimen Daten unbrauchbar wird.

Die Stromprofilgeneratoreinheit besitzt hierbei eine Nebentaktversorgungseinheit zum Erzeugen eines Nebentaktsignals zum Ansteuern eines Stromprofilgenerators, der zur Erzeugung des Störstromprofils eine Vielzahl von Lasten schaltet. Der Störstromprofilgenerator wird somit mit einem vom Haupttaktsignal unabhängigen Nebentaktsignal betrieben, wodurch insbesondere Stromprofilanalysen höherer Ordnung verhindert werden können.

Ferner kann die Stromprofilgeneratoreinheit einen Zufallszahlengenerator aufweisen, der sowohl das Nebentaktsignal als auch das Haupttaktsignal voneinander unabhängig und zufällig verändert. Auf diese Weise wird insbesondere eine statistische (differentielle) Stromprofilanalyse zuverlässig verhindert.

Ferner kann die Stromprofilgeneratoreinheit eine Synchronisationsschaltung zum Erzeugen eines Stromprofilgenerator-Taktsignals auf der Grundlage des Haupt- und Nebentaktsignals aufweisen, wodurch eine weitere Entkopplung von den zufällig erzeugten Haupt- und Nebentaktsignalen ermöglicht wird.

Insbesondere durch die Verwendung einer Synchronisationsschaltung, die eine Korrelation in Zeit- und Frequenzbereich zwischen dem Haupttaktsignal und dem Stromprofilgenerator-Taktsignal verhindert, wird jegliche Art von Stromprofilanalysen höherer Ordnung ausgeschaltet, da keinerlei Rückschlüsse auf die eigentlichen kryptographischen Datenverarbeitungsvorgänge gemacht werden können.

Ferner kann durch Vorsehen einer Synchronisationsschaltung, die an der Stromversorgungsschnittstelle eine sichtbare Schwebung des Haupt- und Nebentaktsignals verhindert eine kryptographische Kodiervorrichtung geschaffen werden, die gegenüber den derzeit bekannten Stromprofilanalysen immun ist.

Weiterhin kann die Stromprofilgeneratoreinheit abschaltbar ausgestaltet werden, wobei eine derartige Abschaltung vorzugsweise bei nicht sicherheitsrelevanten Operationen durchgeführt wird. Der Stromverbrauch der Kodiervorrichtung läßt dadurch beträchtlich verringern.

In den weiteren Unteransprüchen sind weitere vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:
- Figur 1: eine vereinfachte Blockdarstellung einer kryptographischen Kodiervorrichtung gemäß der vorliegenden Erfindung;
- Figur 2: eine vereinfachte Darstellung des in Figur 1 dargestellten Stromprofilgenerators;
- Figur 3: eine vereinfachte zeitliche Darstellung von in der Kodiervorrichtung gemäß Figur 1 auftretenden Stromprofilen;
- Figur 4: eine vereinfachte Darstellung der in Figur 1 dargestellten Synchronisationsschaltung; und
- Figur 5: eine schematische Darstellung zur Veranschaulichung eines Angriffs über Stromprofilanalyse gemäß dem Stand der Technik.

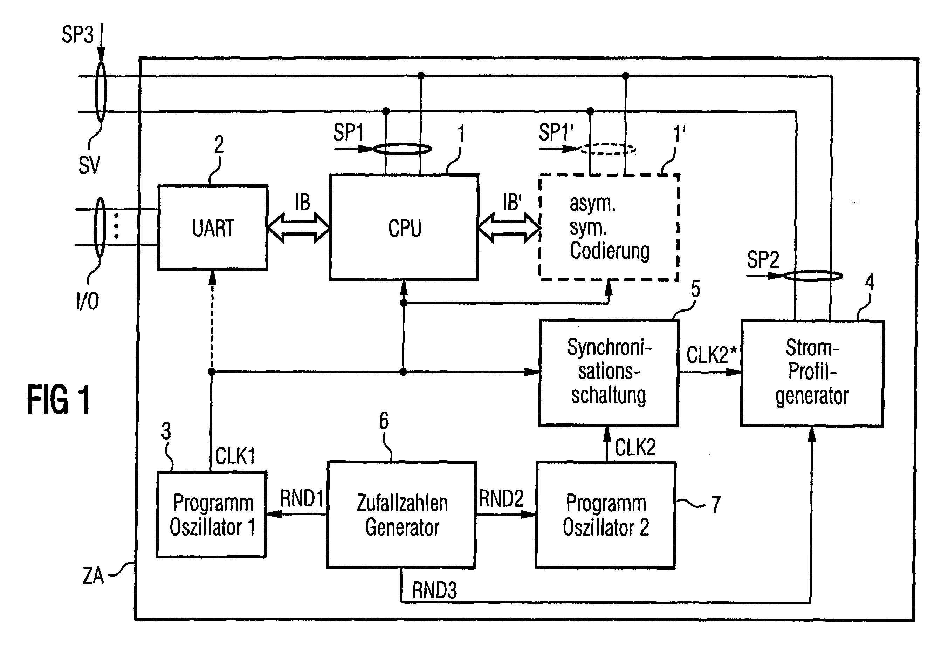

Figur 1 zeigt eine vereinfachte Blockdarstellung einer Kodiervorrichtung zur Realisierung einer kryptographischen Verschlüsselung und/oder Zugangsberechtigung, wie sie beispielsweise in einer sogenannten Chipkarte bzw. Smartcard realisiert ist. Die logischen Einheiten dieser Smartcard bzw. Chipkarte sind hierbei vorzugsweise auf einem Halbleiterbaustein ausgebildet und in einem Zustandsautomaten ZA zusammengefaßt.

Der Zustandsautomat ZA bzw. die logischen Komponenten des Halbleiterbausteins besitzen eine Ein-/Ausgabe-Schnittstelle I/O zum Eingeben und Ausgeben der zu verschlüsselnden bzw. sonstigen Daten. Eine Stromversorgungsschnittstelle SV dient zur Stromversorgung des Zustandsautomaten ZA bzw. der Kodiervorrichtung und stellt sozusagen die Schwachstelle bei einem Angriff mittels Stromprofilanalyse dar. Die Stromversorgungsschnittstelle SV versorgt im wesentlichen alle Komponenten des Zustandsautomaten ZA, wobei zur Vereinfachung der Darstellung lediglich eine Verbindung mit einer Datenverarbeitungseinheit 1, 1' und einem Stromprofilgenerator 4 dargestellt ist.

Die Datenverarbeitungseinheit besteht üblicherweise aus einer Zentraleinheit 1 (CPU, central processing unit) zur Verarbeitung der Daten sowie optional aus einer zusätzlichen Koprozessoreinheit 1', die insbesondere asymmetrische oder symmetrische Kodieroperationen durchführt. Derartige kryptographische Operationen können jedoch auch ohne die Koprozessoreinheit 1' lediglich in der Zentraleinheit 1 durchgeführt werden.

Die von der Zentraleinheit 1 bzw. der zusätzlichen Koprozessoreinheit 1' ausgeführten kryptographischen Verfahren bzw. Protokolle können beispielsweise eine symmetrische Autentifizierung, eine Diffie-Hellmann Exponentialschlüsselübereinkunft, ElGamal -Kryptographie mit öffentlichem Schlüssel, ElGamal-Signaturen, digitale Standardsignaturen, RSA und weitere Kodieralgorithmen aufweisen. Derartige Verfahren bzw. Kodierprotokolle sind allgemein bekannt, weshalb auf eine detaillierte Beschreibung nachfolgend verzichtet wird.

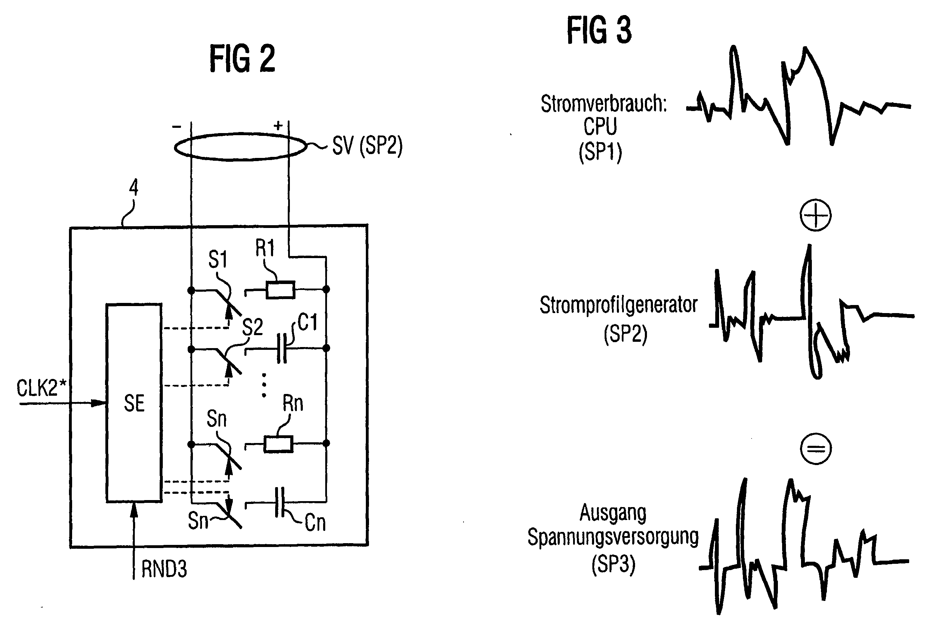

Wesentlich für die vorliegende Erfindung ist vielmehr die Verwendung des Stromprofilgenerators 4 im Zustandsautomaten ZA, der im wesentlichen ein Störstromprofil SP2 erzeugt und den bei der Stromprofilanalyse eigentlich nutzbaren Stromprofilen SP1 der Zentraleinheit 1 und SP1' der optionalen Koprozessoreinheit 1' überlagert. Durch diese Überlagerung wird eine Rückgewinnung von geheimen Schlüsseln bzw. vertraulichen Daten über ein extern abgreifbares Stromprofil SP3 verhindert, wie nachfolgend anhand von Figuren 2 und 3 näher beschrieben wird.

Figur 2 zeigt eine vereinfachte Blockdarstellung des Stromprofilgenerators 4, wie er beispielsweise verwendet werden kann. Der Stromprofilgenerator 4 besteht hierbei im wesentlichen aus einer Vielzahl von Lasten R1, C1, Rn bis Cn, die wahlweise über Schalter S1, S2 bis Sn geschaltet werden können. Die Schalter S1 bis Sn werden vorzugsweise von einer Steuereinheit SE angesteuert. Die Steuereinheit SE kann beispielsweise über ein Stromprofilgenerator-Taktsignal CLK2* und/oder einen Zufallszahlenwert RND3 angesteuert werden, wobei jedoch auch alle weiteren Ansteuerungen denkbar sind. Wesentlich für die Ansteuerung des Stromprofilgenerators 4 ist lediglich die Tatsache, daß die Vielzahl von Lasten in Form von Lastwiderständen R1 bis Rn oder in Form von Lastkapazitäten C1 bis Cn derart unvorhersehbar geschaltet werden, daß sich ein zusätzlicher Stromverbrauch bzw. ein Störstromprofil SP2 ergibt.

Figur 3 zeigt eine vereinfachte Darstellung zur Veranschaulichung des Prinzips der Verhinderung einer Stromprofilanalyse. Gemäß Figur 3 erzeugt die Zentraleinheit 1 das Stromprofil SP1. Gleichzeitig erzeugt der Stromprofilgenerator 4 das Stromprofil SP2, welches auf der Stromversorgungsschnittstelle SV überlagert wird. Dadurch ergibt sich an der Stromversorgungsschnittstelle SV bzw. am Ausgang der Spannungsversorgung, die üblicherweise von einem Angreifer mittels Stromprofilanalyse verwendet wird, ein Stromprofil SP3, das sich aus dem Stromprofil SP1 der Zentraleinheit 1 und dem Stromprofil SP2 des Stromprofilgenerators 4 zusammensetzt. Aufgrund dieser Überlagerung kann das eigentlich zu analysierende und Rückschlüsse auf geheime Schlüssel bzw. kryptographische Verfahren beinhaltende Stromprofil SP1 (bzw. SP1') nicht mehr oder nur noch unter großen Schwierigkeiten herausgefiltert bzw. rückgewonnen werden.

Vorzugsweise erzeugt der Stromprofilgenerator 4 hierbei ein Störstromprofil SP2, welches ähnliche Maximalausschläge bzw. _{"}peaks" wie ein Stromprofil SP1 der Zentraleinheit 1 bzw. ein Stromprofil SP1' der Koprozessoreinheit SP1' aufweist.

Zur Verbesserung des Schutzes gegenüber Stromprofilanalyse einer derartigen kryptographischen Kodiervorrichtung kann der Zustandsautomat ZA gemäß Figur 1 ferner einen Zufallszahlengenerator 6 aufweisen. Der Zufallszahlengenerator 6 erzeugt hierbei pseudozufällige Zufallszahlenwerte RND3, die beispielsweise der Steuereinheit SE des Stromprofilgenerators 4 zugeführt werden können und eine pseudozufällige Erzeugung des Störstromprofils SP2 hervorrufen.

Ferner können Zufallszahlenwerte RND1 einer Haupttaktversorgungseinheit 3 zugeführt werden, wodurch ein Haupttaktsignal CLK1 des Zustandsautomaten ZA variabel eingestellt wird. Vorzugsweise besteht die Haupttaktversorgungseinheit 3 aus einem programmierbaren Oszillator (PLL, phase locked loop), der beispielsweise bei einer Mittenfrequenz von 4 MHz schwingt und über den Zufallszahlenwert RND1 in einem Bereich von 3 bis 7 MHz variabel eingestellt werden kann. Selbstverständlich sind auch andere programmierbare Oszillatoren als Haupttaktversorgungseinheit 3 denkbar, wobei auch die Taktfrequenz in Abhängigkeit von den jeweiligen Prozessortypen gewählt werden kann.

Zur Abkopplung bzw. Entkopplung der externen Datenschnittstelle I/O von einer internen Datenschnittstelle IB wird eine herkömmliche Abkopplungseinheit 2 verwendet. Derartige Abkopplungseinheiten 2 sind als UARTS bekannt und stellen sowohl ein Sende- als auch Empfangsteil dar, welches in der Lage ist, zwei unterschiedliche Schnittstellen, d. h. die externe Datenschnittstelle I/O und die interne Datenschnittstelle IB bzw. deren unterschiedliche Taktsignale aneinander anzupassen. Derartige Abkopplungseinheiten sind allgemein bekannt, weshalb auf eine detaillierte Beschreibung nachfolgend verzichtet wird.

Aufgrund der somit herbeigeführten pseudozufälligen Schwankungen im Haupttaktsignal CLK1 wird eine Stromprofilanalyse an der Stromversorgungsschnittstelle SV weiter erschwert, wodurch sich die Sicherheit des Zustandsautomaten ZA gegenüber Angriffen mittels Stromprofilanalyse weiter verbessert.

Eine gegenüber Angriffen mittels Stromprofilanalyse besonders sichere Anordnung ergibt sich insbesondere dann, wenn gemäß Figur 1 zusätzlich zur Haupttaktversorgungseinheit 3 eine weitere Nebentaktversorgungseinheit 7 in Kombination mit einer Synchronisationsschaltung 5 verwendet wird. Gemäß Figur 1 wird hierbei die Nebentaktversorgungseinheit 7 ebenfalls über einen Zufallszahlenwert RND2 vom Zufallszahlengenerator 6 derart angesteuert, daß sie ein pseudozufälliges Nebentaktsignal CLK2 generiert. Vorzugsweise besteht die Nebentaktversorgungseinheit 7 aus einem ähnlichen programmierbaren Oszillator (PLL, phase locked loop) wie die Haupttaktversorgungseinheit 3, wobei sich jedoch vorzugsweise die Mittenfrequenzen voneinander unterscheiden. In gleicher Weise unterscheidet sich auch der Frequenzbereich der Nebentaktversorgungseinheit 7 von der Haupttaktversorgungseinheit 3, wobei sie jedoch auch eine gleiche Mittenfrequenz und einen gleichen Frequenzbereich aufweisen können. Aufgrund der unterschiedlichen Zufallszahlenwerte RND1 und RND2 erzeugen die Haupttaktversorgungseinheit 3 und die Nebentaktversorgungseinheit 7 jedoch grundsätzlich unterschiedliche Taktsignale CLK1 und CLK2, die der Synchronisationsschaltung 5 zugeführt werden.

Die Synchronisationsschaltung 5 dient im wesentlichen der Verhinderung eines Effektes, wonach im Stromprofil SP3 der Stromversorgungsschnittstelle SV eine Schwebung der beiden Oszillatoren sichtbar werden kann. Ferner verhindert die Synchronisationsschaltung 5, daß sich eine Korrelation im Zeit- und Frequenzbereich zwischen dem Haupttaktsignal CLK1 und einem von der Synchronisationsschaltung 5 erzeugten Stromprofilgenerator-Taktsignal CLK2* ergibt, welches vorzugsweise der Ansteuerung des Stromprofilgenerators 4 bzw. deren Steuereinheit SE dient.

Figur 4 zeigt eine schematische Darstellung eines bevorzugten Aufbaus für die Synchronisationsschaltung 5. Die Synchronisationsschaltung 5 gemäß Figur 4 stellt im wesentlichen ein flankengetriggertes UND-Gatter mit einer Totzeitverzögerung dar. Zum Verzögern des Haupttaktsignal CLK1 um eine Tot-Totzeit τ besitzt die Synchronisationsschaltung 5 hierfür ein Totzeitglied 51. Ferner besitzt die Synchronisationsschaltung 5 zur Erzeugung des Stromprofilgenerator-Taktsignals CLK2* ein flankengetriggertes UND-Gatter 52 zum Durchschalten des Nebentaktsignals CLK2. Genauer gesagt schaltet die Synchronisationsschaltung 5 nur dann das Nebentaktsignal CLK2 der Nebentaktversorgungseinheit 7 zum Stromprofilgenerator 4 als Stromprofilgenerator-Taktsignal CLK2* durch, wenn bei der Haupttaktversorgungseinheit 3 nicht gerade ein neues Taktsignal CLK1 erzeugt wird. Die Synchronisationsschaltung 5 wird demzufolge durch das Haupttaktsignal CLK1 der Haupttaktversorgungseinheit 3 getriggert und läßt das Nebentaktsignal CLK2 der Nebentaktversorgungseinheit 7 erst nach einer Tot-Totzeit τ durch, die abhängig von der Technologie oder anderen Parametern gewählt wird oder einstellbar ist. Vorzugsweise ist die vom Totzeitglied 51 erzeugte Totzeit τ konfigurierbar bzw. einstellbar.

Insbesondere durch die Kombination des weiteren Oszillators bzw. der Nebentaktversorgungseinheit 7 mit der Synchronisationsschaltung 5 erhält man einen Zustandsautomaten ZA bzw. eine Kodiervorrichtung zur Realisierung einer kryptographischen Verschlüsselung und/oder Zugangsberechtigung, die mittels Korrelationsanalysen von Stromprofilen nicht angegriffen werden kann. Insbesondere geheime Schlüssel (private-keys), Signaturen, elektronische Geldbörsen, Schreibschutz usw. können dadurch vor einem unerlaubten Zugriff geschützt werden.

Da die Datenverarbeitungseinheit bestehend aus der Zentraleinheit 1 und der Koprozessoreinheit 1' nicht andauernd sicherheitsrelevante Operationen durchführen, können zur Verringerung des Stromverbrauchs sowie zur weiteren Verbesserung der Sicherheit die Schutzmaßnahmen zeitweise abgeschaltet werden. Genauer gesagt könnte beispielsweise der Zufallszahlengenerator 6, die Nebentaktversorgungseinheit 7, die Synchronisationsschaltung 5 und/oder der Stromprofilgenerator 4 vorübergehend abgeschaltet werden, wenn von der Zentraleinheit 1 bzw. deren Koprozessoreinheit 1' bezüglich der Sicherheit unkritische Operationen durchgeführt werden.

Insbesondere bei Verwendung der Nebentaktversorgungseinheit 7 in Verbindung mit der Synchronisationsschaltung 5 können Angriffe mittels statistischer Analysen und/oder Auswertung der Stromprofile im Zeitbereich und/oder im Spektralbereich zuverlässig abgewehrt werden.

Die Erfindung wurde vorstehend anhand eines Zustandsautomaten in einer Chipkarte bzw. Smartcard beschrieben. Sie ist jedoch nicht darauf beschränkt und umfaßt vielmehr alle weiteren Zustandsautomaten, wie sie beispielsweise in sicherheitsrelevanten Mikroprozessoreinheiten oder anderen Sicherheitsmodulen verwendet werden können. In gleicher Weise kann die vorliegende Erfindung nicht nur auf asymmetrische sondern auch auf alle weiteren und insbesondere symmetrische Verschlüsselungsverfahren (Kryptographie) angewendet werden.

## Patentansprüche

1. Kodiervorrichtung zur Realisierung einer kryptographischen Verschlüsselung und/oder Zugangsberechtigung mit:
- einer Datenverarbeitungseinheit (1, 1') zur Realisierung von kryptographischen Operationen;
- einer Abkopplungseinheit (2) zum Abkoppeln einer externen Datenschnittstelle (IO) von einer internen Datenschnittstelle (IB);
- einer Stromversorgungsschnittstelle (SV) zur Stromversorgung der Kodiervorrichtung (ZA);
- einer Haupttaktversorgungseinheit (3) zum Erzeugen eines Haupttaktsignals (CLK1);
- eine mit der Stromversorgungsschnittstelle verbundene Stromprofilgeneratoreinheit (4) zum Erzeugen eines Störstromprofils (SP2) und
- einem Zufallszahlengenerator (6) zum Erzeugen von Zufallszahlenwerten (RND1, RND2, RND3),
**dadurch gekennzeichnet, daß** die Stromprofilgeneratoreinheit eine Nebentaktversorgungseinheit (7) zum Erzeugen eines das Störstromprofil beeinflussenden Nebentaktsignals (CLK2) aufweist und das Nebentaktsignal (CLK2) in Abhängigkeit der Zufallszahlenwerte verändert wird.

2. Kodiervorrichtung nach Patentanspruch 1,
**dadurch gekennzeichnet, daß** die Stromprofilgeneratoreinheit einen Stromprofilgenerator (4) aufweist, der zur Erzeugung des Störstromprofils (SP2) mittels einer Schalteinheit (SE) eine Vielzahl von Lasten (R1,...Cn) schaltet.

3. Kodiervorrichtung nach Patentanspruch 1 oder 2,
**dadurch gekennzeichnet, daß** der Zufallszahlengenerator (6) ferner das Haupttaktsignal (CLK1) der Haupttaktversorgungseinheit (3) in Abhängigkeit von den Zufallszahlenwerten (RND1) verändert.

4. Kodiervorrichtung nach Patentanspruch 2,
**dadurch gekennzeichnet, daß** der Zufallszahlengenerator (6) ein Schaltverhalten der Schalteinheit (SE) des Stromprofilgenerators (4) in Abhängigkeit von den Zufallszahlenwerten (RND3) verändert.

5. Kodiervorrichtung nach einem der Patentansprüche 1 bis 4,
**dadurch gekennzeichnet, daß** die Stromprofilgeneratoreinheit eine Synchronisationsschaltung (5) zum Erzeugen eines Stromprofilgenerator-Taktsignals (CLK2*) auf der Grundlage des Haupt- und Nebentaktsignals (CLK1, CLK2) aufweist.

6. Kodiervorrichtung nach Patentanspruch 5,
**dadurch gekennzeichnet, daß** die Synchronisationsschaltung (5) eine Korrelation im Zeit- und Frequenzbereich zwischen dem Haupttaktsignal (CLK1) und dem Stromprofilgenerator-Taktsignal (CLK2*) verhindert.

7. Kodiervorrichtung nach Patentanspruch 5 oder 6,
**dadurch gekennzeichnet, daß** die Synchronisationsschaltung (5) eine an der Stromversorgungsschnittstelle (SV) sichtbare Schwebung des Haupt- und Nebentaktsignals (CLK1,CLK2) verhindert.

8. Kodiervorrichtung nach einem der Patentansprüche 5 bis 7,
**dadurch gekennzeichnet, daß** die Synchronisationsschaltung ein Totzeitglied (51) zum Verzögern des Haupttaktsignals (CLK1) aufweist.

9. Kodiervorrichtung nach einem der Patentansprüche 5 bis 8,
**dadurch gekennzeichnet, daß** die Synchronisationsschaltung (5) ein flankengetriggertes UND-Gatter (52) zum Erzeugen des Stromprofilgenerator-Taktsignals (CLK2*) mit Triggerung durch das Nebentaktsignal (CLK2) als verzögertes Haupttaktsignal (CLK1) aufweist.

10. Kodiervorrichtung nach einem der Patentansprüche 8 oder 9,
**dadurch gekennzeichnet, daß** das Totzeitglied (51) einstellbar ist.

11. Kodiervorrichtung nach einem der Patentansprüche 1 bis 10,
**dadurch gekennzeichnet, daß** die Stromprofilgeneratoreinheit das Störstromprofil (SP2) derart erzeugt, daß es einen ähnlichen Maximalausschlag wie ein Stromprofil (SP1, SP1') der Datenverarbeitungseinheit (1, 1') aufweist.

12. Kodiervorrichtung nach einem der Patentansprüche 1 bis 11,
**dadurch gekennzeichnet, daß** die Stromprofilgeneratoreinheit abschaltbar ist.

## Claims

1. Coding device for implementing cryptographic encryption and/or access authorization with:
- a data processing unit (1, 1') for implementing cryptographic operations:
- a decoupling unit (2) for decoupling an external data interface (IO) from an internal data interface (IB) ;
- a power supply interface (SV) for supplying power to the coding device (ZA);
- a main clock supply unit (3) for generating a main clock signal (CLK1);
- a power profile generator unit (4) for generating an interference power profile (SP2), which power profile generator unit is connected to the power supply interface, and
- a random number generator (6) for generating random number values (RND1, RND2, RND3)
**characterized in that** the power profile generator unit has a secondary clock supply unit (7) for generating a secondary clock signal (CLK2) which influences the interference power profile, and the secondary clock signal (CLK2) is changed as a function of the random number values.

2. Coding device according to Patent Claim 1, **characterized in that** the power profile generator unit has a power profile generator (4) which switches a multiplicity of loads (R1,...Cn) in order to generate the interference power profile (SP2) by means of a switching unit (SE).

3. Coding device according to Patent Claim 1 or 2, **characterized in that** the random number generator (6) also changes the main clock signal (CLK1) of the main clock supply unit (3) as a function of the random number values (RND1).

4. Coding device according to Patent Claim 2, **characterized in that** the random number generator (6) changes a switching behavior of the switching unit (SC) of the power profile generator (4) as a function of the random number values (RND3).

5. Coding device according to one of Patent Claims 1 to 4, **characterized in that** the power profile generator unit has a synchronizing circuit (5) for generating a power profile generator clock signal (CLK2*) on the basis of the main clock signal and secondary clock signal (CLK1, CLK2).

6. Coding device according to Patent Claim 5, **characterized in that** the synchronizing circuit (5) prevents correlation between the main clock signal (CLK1) and the power profile generator clock signal (CLK2*) in the time domain and frequency domain.

7. Coding device according to Patent Claim 5 or 6, **characterized in that** the synchronizing circuit (5) prevents the main clock signal (CLK1) and the secondary clock signal (CLK2) from beating in a way which is visible at the power supply interface (SV).

8. Coding device according to one of Patent Claims 5 to 7, **characterized in that** the synchronizing circuit has a delay element (51) for delaying the main clock signal (CLK1).

9. Coding device according to one of Patent Claims 5 to 8, **characterized in that** the synchronizing circuit (5) has a signal edge-triggered AND gate (52) for generating the power profile generator clock signal (CLK2*) with triggering by the secondary clock signal (CLK2) as a delayed main clock signal (CLK1).

10. Coding device according to one of Patent Claims 8 or 9, **characterized in that** the delay element (51) is adjustable.

11. Coding device according to one of Patent Claims 1 to 10, **characterized in that** the power profile generator unit generates the interference power profile (SP2) in such a way that it has a similar maximum excursion to a power profile (SP1, SP1') of the data processing unit (1, 1').

12. Coding device according to one of Patent Claims 1 to 11, **characterized in that** the power profile generator unit can be switched off.

## Revendications

1. Dispositif de codage pour réaliser un chiffrement cryptographique et/ou une autorisation d'accès, comprenant :
- une unité (1, 1') informatique pour réaliser des opérations cryptographiques ;
- une unité (2) de découplage d'une interface (10) de données extérieure d'une interface (IB) de données intérieure ;
- une interface (SV) d'alimentation en courant du dispositif (ZA) de codage ;
- une unité (3) d'horloge principale de production d'un signal (CLK1) d'horloge principale;
- une unité (4) à générateur de profil de courant, qui est reliée à l'interface d'alimentation en courant et qui est destinée à produire un profil (SP2) de courant parasite; et
- un générateur (6) de nombres aléatoires pour produire des valeurs (RND1, RND2, RND3) de nombres aléatoires,
**caractérisé en ce que** l'unité de production de profil de courant a une unité (7) d'horloge secondaire pour produire un signal (CLK2) d'horloge secondaire influant sur le profil de courant parasite et le signal (CLK2) d'horloge secondaire est modifié en fonction des valeurs de nombres aléatoires.

2. Dispositif de codage suivant la revendication 1,
**caractérisé en ce que** l'unité de production de profil de courant a un générateur (4) de profil de courant qui, pour la production du profil (SP2) de courant parasite, branche une pluralité de charges (R1, ... Cn) au moyen d'une unité (SE) de commutation.

3. Dispositif de codage suivant la revendication 1 ou 2,
**caractérisé en ce que** le générateur (6) de nombres aléatoires modifie, en outre, le signal (CLK1) d'horloge principale de l'unité (3) d'horloge principale en fonction des valeurs (RND1) de nombres aléatoires.

4. Dispositif de codage suivant la revendication 2,
**caractérisé en ce que** le générateur (6) de nombres aléatoires modifie un comportement de commutation de l'unité (SE) de commutation du générateur (4) de profil de courant en fonction des valeurs (RND3) de nombres aléatoires.

5. Dispositif de codage suivant l'une des revendications 1 à 4,
**caractérisé en ce que** l'unité de production de profil de courant a un circuit (5) de synchronisation pour produire un signal (CLK2*) d'horloge de générateur de profil de courant sur la base du signal (CLK1, CLK2) d'horloges principale et secondaire.

6. Dispositif de codage suivant la revendication 5,
**caractérisé en ce que** le circuit (5) de synchronisation empêche une corrélation dans le domaine temporel et dans le domaine fréquentiel entre le signal (CLK1) d'horloge principale et le signal (CLK2*) d'horloge de générateur de profil de courant.

7. Dispositif de codage suivant la revendication 5 ou 6,
**caractérisé en ce que** le circuit (5) de synchronisation empêche une fluctuation visible sur l'interface (SV) d'alimentation en courant du signal (CLK1, CLK2) d'horloges principale et secondaire.

8. Dispositif de codage suivant l'une des revendications 5 à 7,
**caractérisé en ce que** le circuit de synchronisation a un élément (51) de temps mort pour retarder le signal (CLK1) d'horloge principale.

9. Dispositif de codage suivant l'une des revendications 5 à 8,
**caractérisé en ce que** le circuit (5) de synchronisation a une porte (52) ET déclenchée par le front de production du signal (CLK2*) d'horloge de générateur de profil de courant avec déclenchement par le signal (CLK2) d'horloge secondaire en tant que signal (CLK1) d'horloge principale retardé.

10. Dispositif de codage suivant l'une des revendications 8 ou 9,
**caractérisé en ce que** l'élément (51) de temps mort est réglable.

11. Dispositif de codage suivant l'une des revendications 1 à 10,
**caractérisé en ce que** l'unité de production de profil de courant produit le profil (SP2) de courant parasite de manière à ce qu'il ait une excursion maximum analogue à un profil (SP1, SP1') de courant de l'unité (1, 1') informatique.

12. Dispositif de codage suivant l'une des revendications 1 à 11,
**caractérisé en ce que** l'unité de production de profil de courant peut être débranchée.
